# EUROPEAN PATENT SPECIFICATION

(11) **EP 3 047 674 B1**
(45) Date of publication and mention of the grant of the patent: **04.07.2018**
(21) Application number: 14846265.8
(22) Date of filing: 16.09.2014
(51) Int. Cl.: H04W 28/08, H04W 88/18, H04W 4/14

(54) **CONGESTION CONTROL FOR SHORT MESSAGE SERVICE IN 3RD GENERATION PARTNERSHIP PROJECT (3GPP) SYSTEMS**
ÜBERLASTSTEUERUNG FÜR EINEN KURZNACHRICHTENDIENST IN 3RD GENERATION PARTNERSHIP PROJECT (3GPP)-SYSTEMEN
RÉGULATION DE L'ENCOMBREMENT DU TRAFIC POUR UN SERVICE DE MESSAGES COURTS DANS DES SYSTÈMES DE PROJET DE PARTENARIAT DE 3ÈME GÉNÉRATION (3 GPP)

(30) Priority: 17.09.2013 US 201361879014 P; 15.09.2014 US 201414486651
(43) Date of publication of application: 27.07.2016
(73) Proprietor: Intel IP Corporation, Santa Clara, CA 95054 (US)
(72) Inventor: JAIN, Puneet K., Hillsboro, Oregon 97124 (US)
(74) Representative: Rummler, Felix
(86) International application number: PCT/US2014/055939
(87) International publication number: WO 2015/042069

(56) References cited:
- EP-A1- 2 608 567
- EP-A2- 2 605 606
- WO-A1-2013/055063
- WO-A2-2013/051826
- US-A1- 2012 257 571
- "3rd Generation Partnership Project; Technical Specification Group Core Network and Terminals; Diameter based protocols to support Short Message Service (SMS) capable Mobile Management Entities (MMEs) (Release 12)", 3GPP STANDARD; 3GPP TS 29.338, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG4, no. V12.1.0, 24 June 2013 (2013-06-24), pages 1-42, XP050692763, [retrieved on 2013-06-24]
- '3RD GENERATION PARTNERSHIP PROJECT; TECHNICAL SPECIFICATION GROUP CORE NETWORK AND TERMINALS; DIAMETER BASED PROTOCOLS TO SUPPORT SHORT MESSAGE SERVICE (SMS) CAPABLE MOBILE MANAGEMENT ENTITIES (MMES) (RELEASE 12)' 3GPP TS 29.338,V12.1.0 24 June 2013, pages 1 - 42, XP050692763 Retrieved from the Internet: <URL:htt/://www.3gpp.org/DynaReport/29338.h tm>

## Description

### RELATED APPLICATION

This application claims priority benefit of U.S. provisional patent application no. 61/879,014, filed September 17, 2013.

### TECHNICAL FIELD

The present disclosure generally relates to management of short message (SM) loads and, more particularly, to management of mobile originated (MO) short message service (SMS) messages, mobile terminated (MT) SMS messages, and other types of SMs including small data transfer and device triggering via a mobility management entity (MME) or serving general packet radio service (GPRS) support node (SGSN).

### BACKGROUND INFORMATION

3 GPP network systems provide for transport, subscriber management, and other communication services including various architectural enhancements motivated by, but not restricted to, MTC. For example, one such service is control plane device triggering-so-called device triggering, or simply, triggering. Device triggering is a technique to send information (e.g., a device trigger, or simply, trigger) to a user equipment device (or simply, UE) to cause it to perform application specific actions including initiating communications with a services capability server (SCS) (in an indirect communication model system) or an application server (AS) (in a direct communication model system). For example, device triggering is frequently employed when a network address for a UE is not available or reachable by the SCS/AS. In such a case, a device trigger message may be used to establish communications because the trigger includes information that facilitates routing of messages in a 3GPP network to an appropriate UE application, and facilitates that UE application to route messages to an appropriate SCS/AS application.

There are several types of device triggering schemes. T4 device triggering uses MT-SMS messages for delivering a device trigger to a UE, as defined in 3GPP TS 23.682 for release no. 1 1 (Rel-11) of the 3 GPP standardization. In general, however, a device trigger may include other information, such as user data, conveyed by means of the SMS protocol.

Rel-11 also includes a feature in which SMs can be delivered to UE via an enhanced MME. Accordingly, the enhanced MME is the network entity that supports the so-called SMS in MME feature.

Too many UEs simultaneous sending or receiving device triggers or other SMs, including MT- and MO-SMS messages, can sometimes cause congestion (generally referred to as an overload situation) to the network, and thereby compromise the 3 GPP network performance. In release no. 10 (Rel-10) of the 3GPP standardization, a congestion control mechanism for networks was extended to include non-access stratum (NAS) level congestion control, which includes two types of control: access point name (APN) based congestion control, and general NAS level mobility management congestion control.

APN based congestion control is applicable to UEs that are members of a particular APN. Thus, for a particular APN, the network can provide a maximum limit of the number of connections (bearers) or the number of network accesses to the network.

General NAS level mobility management congestion control is applicable when numerous UEs initiate nearly simultaneous network access attempts, which cause congestion in the serving core network (CN) node, e.g., an MME or serving general packet radio service (GPRS) support node (SGSN).

The 3 GPP standardization currently does not provide for an MME/SGSN that assesses NAS level congestion controls to determine whether and when to deliver (or reject) SMs.

EP 2 605 606 A2 describes a device triggering in case of a congestion control. A triggering server transmits a device trigger request to a terminal over a communication network including a serving network node. The serving network node receives the device trigger request encapsulated in a message and transparent. In order to determine, whether the received message relates to device triggering, the serving network node determines device-triggering capabilities of the terminal and decides, based thereon, whether to forward or not the message to the terminal depending on the applied congestion control. This approach reduces signaling traffic in the congestion case since the terminal is prevented from trying to establish connection and transmit the data in response to the device triggering.

3rd Generation Partnership Project; Technical Specification Group Core Network and Terminals; Diameter based protocols to support Short Message Service (SMS) capable Mobile Management Entities (MMEs) (Release 12)", 3GPP STANDARD; 3GPP TS 29.338, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, (20130624), vol. CT WG4, no. V12.1.0, pages 1 - 42, XP050692763 describes systems pertaining to the technological background of the invention.

### BRIEF DESCRIPTION OF THE DRAWINGS

FIG. 1 is a block diagram of network entities forming a portion of a 3GPP system, according to one embodiment.
FIG. 2 is a message sequence chart showing an MME or SGSN controlling delivery of MT-SMSs or SM device triggers during an overload situation, according to one embodiment.
FIG. 3 is a block diagram of a UE, according to one embodiment.

### DETAILED DESCRIPTION OF EMBODIMENTS

This portion of the disclosure describes MMEs and SGSNs capable of controlling device trigger loads by communicating diameter-based messages over, respectively, SGd and Gdd interfaces (also called reference points) with associated SMS entities. Before continuing with the description, however, the following two paragraphs clarify the meaning of some shorthand notations used for purposes of conciseness in this disclosure. These two paragraphs are then followed by a third paragraph providing a brief overview of five subsections that impart a description of the drawing figures and embodiments.

First, skilled persons will recognize that both MME and SGSN functionality can be implemented on either a single hardware device or as separate network entities (i.e., separate devices). For conciseness, therefore, an MME and SGSN are referred to generally as an MME/SGSN, by which the "/" connotes an inclusive disjunction meaning an MME, an SGSN, or a combination of both an MME and an SGSN. Likewise, the "/" notation is used for other network entities, interfaces, and functions that are similar to each other and can therefore be embodied as one or multiple devices. The SCS/AS mentioned in the background information of this disclosure is one such example.

Second, network entities that provide SMS by relaying, storing, and forwarding SMs are generally referred to herein as a short message service - service center (SMS-SC) entity. This is so because the various entities comprising an SMS-SC-entities that are described in the following subsection-may employ similar interfaces, functions, or hardware platforms. Thus, rather than refer to multiple SMS-SC entities with the aforementioned "/" notation, it is more concise to sometimes refer to them as an SMS-SC entity, or simply an SMS-SC.

Third, the following detailed description is organized into five subsections. The first subsection describes an example of 3GPP network components that are pertinent to congestion control over SGd/Gdd interfaces. The second subsection describes examples of MME/SGSN control of MT-SMS loads by communicating with an SMS-SC over SGd/Gdd interfaces. The third subsection describes an example message procedure for communicating with an SMS-SC over SGd/Gdd interfaces. The fourth subsection describes an example UE in the form of a mobile device embodiment. The fifth subsection describes additional embodiments employing the techniques described herein.

### 1. 3GPP Network Structure for Transferring Short Messages

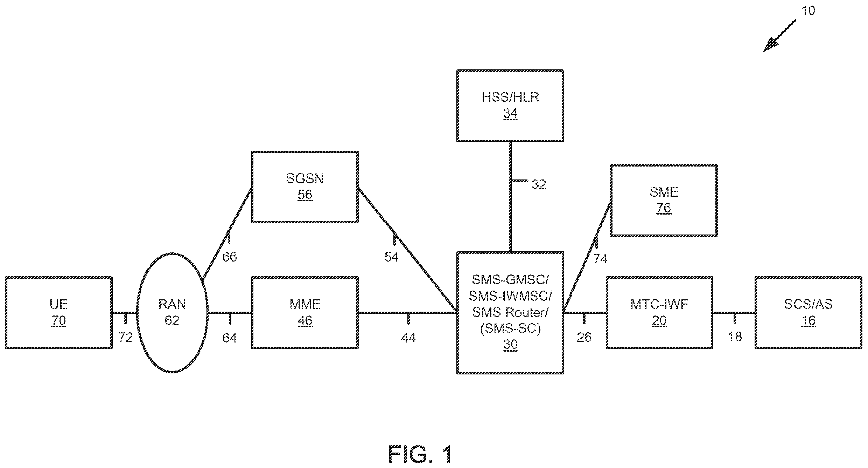

FIG. 1 shows details of a 3GPP network 10 having entities configured to manage delivery of SMs (e.g., MT- and MO-SMS messages, device triggers, or small data transfers) while NAS congestion controls are active. For example, an SCS/AS 16 creates an MT-SMS message and communicates it through a Tsp reference point 18 to an MTC interworking function (MTC-IWF) 20. The MTC-IWF 20 provides over a T4 reference point 26 information representing the MT-SMS message, including information concerning the message destination and its duration of validity.

The message then arrives at an SMS-SC entity 30. The SMS-SC 30 is generally responsible for the relaying, storing, and forwarding of SMs. As noted previously, the SMS-SC entity 30 may include an SMS router, and other SMS-related entities that are generally referred to herein as an SMS-SC entity. For example, a gateway mobile-services switching center (MSC) for short message service (SMS-GMSC) corresponds to the functions of an MSC that are capable of receiving an SM, interrogating over an S6c/C interface 32 a home subscriber server (HSS) or home location register (HLR) 34 for routing information and SMS information. Similarly, an interworking MSC for short message service (SMS-IWMSC) corresponds to the functions of an MSC that are capable of receiving an SM from within a public land mobile network (PLMN) and submitting it to the recipient service center.

The SMS-SC 30 provides the message to an appropriate interface. An SGd interface 44, for example, enables the transfer of SMs between an MME 46 and the SMS-SC 30, as described in 3GPP TS 23.040. Likewise, a Gdd interface 54 enables the transfer of SMs between an SGSN 56 and the SMS-SC 30, as described in 3GPP TS 23.040.

The MME 46 performs packet switching functions for mobile stations located in a geographical area designated as the MME area. Its interface with a radio access network (RAN) 62 is called an S1-MME interface 64.

The SGSN 56 performs packet switching functions for mobile stations located in a geographical area designated as the SGSN area. Its interface with the RAN 62 is called an Iu interface 66.

Lastly, a UE 70 sends and receives messages through an air interface 72. The term UE in universal mobile telecommunications system (UMTS) terminology defined in 3GPP TR 21.905 is synonymous with the term mobile station (MS) that is used in this document and is defined in 3GPP TS 23.040.

In another embodiment, the MME 46 or SGSN 56 can communicate MO-SMS messages over, respectively, the SGd interface 44 and the Gdd interface 54. Also, device triggers can be communicated via the SGd interface 44 and the Gdd interface 54. Accordingly, the various types of messages communicated over these interfaces (e.g., MT-SMS messages, MO-SMS messages, device triggers, or small data transfers) are referred to herein as SMs.

In some embodiments, SMs may be received by the SMS-SC 30 over interfaces other than the Tsp interface 18. For example, FIG. 1 shows a Tsms interface 74 between a short message entity (SME) 76 and the SMS-SC 30. The Tsms interface 74 is an interface that encompasses all the various proprietary SMS-SC-to-SME interface standards, as described in 3GPP technical report (TR) 23.039. The Tsms interface 74 can be used to send a trigger to the UE 70, in which case the trigger is encapsulated in an MT-SMS message. This method of triggering provides over-the-top application access to the UE 70 by any network entity (e.g. an SCS) acting as an SME.

### 2. MME/SGSN Control of SM Loads over SGd/Gdd Interfaces

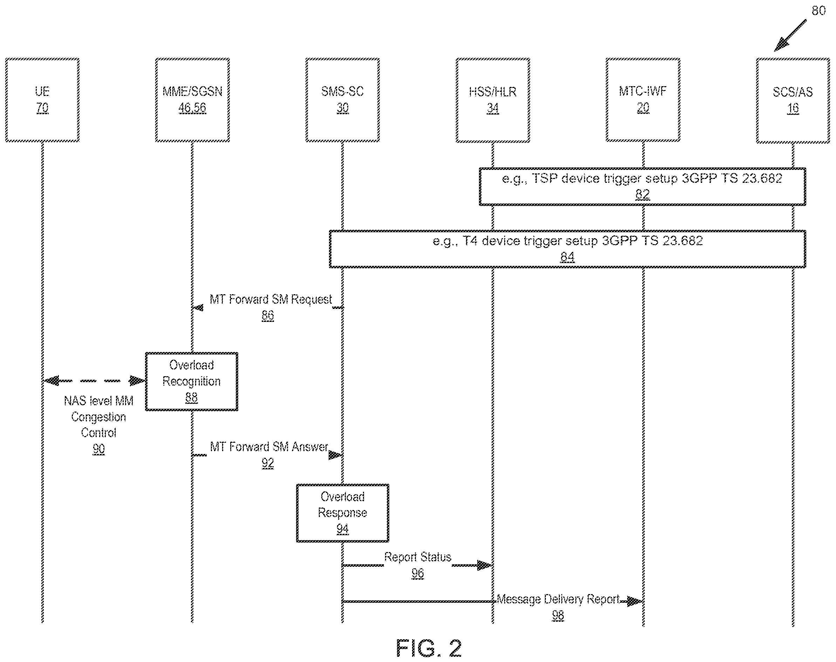

FIG. 2 shows an example of a message flow diagram 80 in which the MME/SGSN 46,56 control their respective SM loads by providing (with the SGd/Gdd interface 44,54) messages delivered to the SMS-SC 30.

Initial messages and sequences 82 of the example diagram 80 are based on Tsp device triggering. Details of Tsp device triggering are described in 3GPP TS 23.682. Likewise, T4 device triggering 84 is also described in 3GPP TS 23.682. In some embodiments, an MT-SMS message may include transfer protocol-protocol identification (TP-PID) information identifying an MT message as a device trigger intended for the UE 70 (i.e., an application on the UE 70). In other embodiments, an MT message is identified as MT-SMS message intended for a user of the UE 70.

After the initial device trigger setup, the SMS-SC 30 sends to the MME/SGSN 46,56 a diameter-based message called an MT forward short message request 86, which is described in greater detail in the following subsection.

Diagram 80 shows an overload situation 88 in which the MME/SGSN 46,56 recognizes that it cannot deliver a trigger due to MME/SGSN overload, for example, NAS level congestion 90. Thus, the MME/SGSN 46,56 (or the HSS/HLR 34, in other embodiments) may not be able to deliver an SM to the UE 70. The overload situation 88 can happen when the UE 70 is sending or receiving too many NAS messages to the evolved packet system, the UE's SM memory capacity is exceeded, the MT-SMS is barred, or the MME/SGSN 46,56 is congested. Other factors such as MME/SGSN processing capability may also cause MME/SGSN congestion. MME NAS level congestion control is defined in 3GPP TS 23.401. SGSN NAS level congestion control is defined in 3GPP TS 23.060.

To reduce the likelihood of an occurrence of network congestion 80 being exacerbated by UEs that respond to triggers, the MME/SGSN 46,56 attempt to ensure that no UEs are triggered as long as the particular congestion situation (e.g., NAS level mobility management congestion control) remains. Accordingly, to reflect the amount of SM load that the MME/SGSN 46,56 wishes to reduce, the MME/SGSN 46,56 can send an MT forward short message answer 92 over the SGd/Gdd interface 44,54. The answer 92, as described in the following subsection, includes an information element (IE) indicating SGd/Gdd SM overload parameters, such as, for example: overload suppression value (e.g., the percentage of messages to reject or allow), suppression validity duration, overload report, suppression subcategories (e.g., a specific priority type), and/or other parameters.

In certain embodiments, suppression may be refereed as throttling, in which case overload parameters include, for example: throttling value, throttling validity duration, and/or throttling subcategories (e.g., a specific priority type).

According to one embodiment, when the MME 46 cannot deliver the SM to the UE 70, the MME 46 returns a failure report to the SMS-SC 30 (e.g., the SMS GMSC/SMS router). A failure report may be sent as part of an extended MT forward short message answer. For example, in some embodiments, the MT forward short message answer 92 (described in the following subsection) can be extended to include a new congestion value for result-code attribute value pair (AVP). Also, an SM delivery failure cause AVP inside the MT forward short message answer 92 can be extended to include a new value indicating the cause of the congestion.

In some embodiments, the MT forward short message answer 92 can include a back -off timer value AVP indicating for the SMS-SC 30 that the SMS-SC 30 should suppress SMs (e.g., MT-SMS or device trigger messages) until the duration of the back-off timer has lapsed.

In some embodiments, the MT forward short message answer 92 can include an overload supported feature AVP (e.g. granular or course control of overload) and an overload parameter AVP (e.g. back-off timer value, overload suppression value, overload report, overload validity duration, or other similar overload parameter AVPs).

In some embodiments, the MME/SGSN 46,56 can send new diameter message to the SMS-SC 30 indicating the congestion situation and back-off timer value. New messages may contain overload parameters (e.g. overload suppression value, overload report, overload validity duration, etc.).

The SMS-GMSC/SMS router/HSS procedures for handling and responding 94 to the failure report are specified in TS 23.040. Additionally, if the SM failed due to the UE 70 not being reachable, the MME 46 sets the Mobile-Not-Reachable-Flag-in-MME-for-SMS (MNRF-MME) indication in the MME 46.

If the UE 70 subsequently becomes reachable and MNRF-MME indication is set, then the MME 46 sends a Ready for SM (international mobile subscriber identity (IMSI), UE-Present) message to the HSS 34 and the MME 46 clears the corresponding MNRF-MME indication associated with the UE 70. Notably, in the case that the MME 46 receives an indication from a serving gateway (S-GW) that the UE 70 has handover to non-3GPP coverage, it will not trigger this activity notification.

If the UE 70 subsequently notifies the MME 46 that SMS memory is available, then the MME 46 sends a Ready for SM (IMSI, UE-Memory-Available) message to the HSS 34.

Reception of a Ready for SM message or an Update Location Request message by the HSS 34 when MNRF is set will trigger the SMS alert procedure as defined in 3GPP TS 23.040.

If the MME/SGSN 46,56 is congested (e.g. general overload, or the MME/SGSN 46,56 is running a NAS level congestion back-off timer, etc.), then the MME/SGSN 46,56 returns a failure report using MT forward short message answer to SMS-SC/SMS GMSC/SMS router 30 indicating such congestion. The SMS-SC 30, upon receiving a failure report indicating congestion, may start a back-off timer and will not attempt sending SMs to the (serving) MME/SGSN 46,56 until the expiry of this timer. In general, however, when receiving SGd/Gdd overload parameters from the MME/SGSN 46,56, the SMS-SC 30 can conduct overload control in any of the following manners: (1) perform SM suppression as indicated in the SGd/Gdd overload parameters to stop submitting SMs to the congested network node; (2) report status 96 and/or return 98 the failure report with appropriate cause value to the SCS 16 (i.e., by way of MTC-IWF 20) for suppressing a trigger as indicated in the SGd/Gdd suppression parameters; or (3) determine if load control should be performed towards one or more MTC-IWFs.

In some embodiments, during an overload situation, the MME/SGSN 46,56 provides support for communicating SMs to UEs for high priority SMs.

When the MME/SGSN 46,56 is recovering from overload situation or network congestion, the MME/SGSN 46,56 can also send a new or updated message over the SGd/Gdd 44,54 interface to the SMS-SC 30. The new or updated message thereby indicates new overload parameters for modifying the SM suppression configuration, or resuming handling SMs from the SMS-SC 30 when the suppression duration is expired.

If the MME/SGSN 46,56 applies NAS level congestion control to a particular target UE-the UE 70 having a running back-off timer (or the MME/SGSN 46,56 is running a timer for the UE 70)-the MME/SGSN 46,56 can decide whether to reject the trigger request in order to avoid MO mobility management (MM) or session management signaling from the (target) UE 70 to the network 10. The MME/SGSN 46,56 may reject the trigger request to the UE 70 based on one or more of the following conditions: the priority of the trigger request, if the trigger request is used for device triggering, or if a back-off timer is applied to the (target) UE 70.

An appropriate reject cause indicates that the unsuccessful trigger request delivery is for the particular UE 70 (e.g., due to congestion or MM back-off timing). Additionally, the MME/SGSN 46,56 may inform the SMS-SC 30 about a back-off timer for dropping the further trigger request to the UE 70 (similar or different value as the MM back-off timer running in the MME/SGSN 46,56). For an SM having a validity period, the SMS-SC 30 can compare the validity period and the back-off timer duration, if any, to conduct further handling for the triggering message. If the duration of the validity period is longer than that of the back-off timer, the SMS-SC 30 can attempt delivery of the triggering message to the target UE 70 at a later time occurring after the expiration of the back-off timer duration but before expiration of the validity period. Otherwise, the SMS-SC 30 can delete the triggering message either immediately or after the expiration of the validity period and report 98 the failure of the trigger delivery (e.g., indicates that the cause of the failure delivery is due to network congestion) to the MTC-IWF 20 over the T4 interface 26.

In another embodiment, if the MME/SGSN 46,56 applies NAS level congestion control to the particular target UE 70, then the MME/SGSN 46,56 can decide to store the trigger and re-attempt the delivery after the back-off timer expires. In this case, the MME/SGSN 46,56 will inform the SMS-SC 30 of the trigger delivery status.

Although the aforementioned embodiments apply to both device triggering and MT-SMS, in some situations the MME/SGSN 46,56 may differentiate between a device trigger and MT-SMS for purposes of reacting to different congestion situations. As noted, a device trigger and a more general MT-SMS can be identified based on a TP-PID field in the transfer protocol data unit (TPDU) of SMS message. TP-PID is defined in 3GPP TS 23.040. Thus, the MME/SGSN 46,56 may read the TP-PID to determine if it identifies an SMS message or a device triggering short message or any other message. Accordingly, if the MME/SGSN 46,56 is congested, then based on operator policy/configuration, the MME/SGSN 46,56 may drop device triggers but allow MT-SMSs, or alternatively, it may drop MT-SMS and allow device triggers.

The aforementioned overload control mechanism for SMs conveyed from the SMS-SC 30 to the MME/SGSN 46,56 is not limited to MT messages. In fact, the mechanism has a similar implementation for MO messages. For example, in some embodiments, the SMS-SC 30 may itself become aware of or it is otherwise informed of an overload at the SMS-SC 30 and thereby sends overload parameters (e.g., overload suppression value, overload report, overload validity duration, back-off timer, etc.) to the MME/SGSN 46,56. Thus, in certain embodiments, if the SMS-SC 30 is overloaded, it can send an MO forward short message answer message to the MME/SGSN 46,56. In some embodiment, such an MO forward short message answer can be extended to include new congestion value for result-code AVP. An SM delivery failure cause AVP inside the MO forward short message answer can be extended to include new value indicating the cause of the congestion.

In some embodiment, the MO forward short message answer can include a back-off timer value AVP indicating to the MME/SGSN 46,56 to suppress SMs until the duration of back-off timer has lapsed.

In some embodiments, the MO forward short message answer can include an overload supported feature AVP (e.g. granular or course control of overload) and overload parameter AVP (e.g. back-off timer value, overload suppression value, overload report, overload validity duration, etc).

In some embodiments, the SMS-SC 30 can send a new diameter message to the MME/SGSN 46,56 indicating a congestion situation and a back-off timer value. The new message may contain overload parameters (e.g. overload suppression value, overload report, overload validity duration, etc.).

If the SMS-SC 30 is congested, then the SMS-SC 30 returns a failure report using MO forward short message answer to MME/SGSN 46,56 indicating such congestion. The MME/SGSN 46,56, upon receiving a failure report indicating congestion, may start a back-off timer and will not attempt sending SMs to the SMS-SC 30 until the expiry of this timer. In general, however, when receiving SGd/Gdd overload parameters from the SMS-SC 30, the MME/SGSN 46,56 can conduct overload control in any of the following manners: (1) perform SM suppression as indicated in the SGd/Gdd overload parameters to stop submitting SMs to the congested network node; (2) report status (e.g., akin to status 96, FIG. 2) and/or return the failure report (e.g., akin to report 98, FIG. 2) with an appropriate cause value to the UE 70. An example cause value may, for example, indicate the UE 70 should begin applying NAS based congestion control.

In some embodiments, during an overload situation, the SMS-SC 30 provides support for communicating SMs to MME/SGSN 46,56 for high priority SMs.

When the SMS-SC 30 is recovering from overload situation or network congestion, the SMS-SC 30 can also send a new or updated message over the SGd/Gdd 44,54 interface to the MME/SGSN 46,56. The new or updated message thereby indicates new overload parameters for modifying the SM suppression configuration, or resuming handling SMs from the MME/SGSN 46,56 when the suppression duration is expired.

### 3. Example 3GPP TS 29.338 Standardization

This subsection provides an example of standardization of a MME/SGSN message procedure for responding to NAS level congestion. The message procedure is called an MT forward short message procedure. The procedure is typically used between the SMS-SC and the serving MME or SGSN (transiting though an SMS Router, if present) to forward mobile terminated short messages. This procedure is used according to the call flows described in 3GPP TS 23.040 section 10, and the procedure includes an MT forward short message request and an MT forward short message answer. These messages are mapped to the commands MT-Forward-Short-Message-Request/Answer (TFR/TFA) in the Diameter-based message formats, including an IE and AVP information, specified in 3GPP TS 29.338.

The following tables 1 and 2 specify the involved information elements for the MT forward short message request.

**Table 1: MT Forward Short Message Request**

| IE name | Mapping to Diameter AVP | Cat. | Description |
|---|---|---|---|
| SM RP DA | User-Name* | Mandatory (M) | This information element shall contain an IMSI. *(See internet engineering task force (IETF) request for comments (RFC) 3588) |
| SM RP OA | SC-Address | M | This information element shall contain the Service Center address. |
| SM RP UI | SM-RP-UI | M | This information element shall contain the short message transfer protocol data unit. |
| MME Number for MT SMS | MME-Number-for-MT-SMS | Conditional (C) | This information element contains the Integrated Services for Digital Network (ISDN) number of the MME (see 3GPP TS 23.003) and shall be present when the request is sent to an MME. |
| SGSN Number | SGSN-Number | C | This information element contains the ISDN number of the SGSN (see 3GPP TS 23.003) and shall be present when the request is sent to an SGSN. |
| TFR-Flags | TFR-Flags | C | This information element shall contain a bit mask. Bit 0 indicates, when set, if the Service Center has more messages to send. |
| SM Delivery Timer | SM-Delivery-Timer | Optio nal (O) | This information element, when present, shall indicate the SM Delivery Timer value set in the SMS-GMSC to the IP-SM-GW. |
| SM Delivery Start Time | SM-Delivery-Start-Time | O | This information element, when present, shall indicate the timestamp (in UTC) at which the SM Delivery Supervision Timer was started in the SMS-GMSC. |
| Overload Supported Features | Overload-Supported-Feature | O | If present, this information element shall contain the list of supported overload features. |
| Overload Parameters | Overload-Parameters | O | If present, this information element shall contain the list overload parameters (e.g., overload suppression value, a back-off timer, or other parameters) |
| Supported Features | Supported-Features* | O | If present, this information element shall contain the list of features supported by the origin host. *(See 3GPP TS 29.229) |

The following table 2 defines a diameter-based message, which is extends table 1 for 3GPP TS 29.338, and which is formatted according to a command code format (CCF) definition for the diameter base protocol of IETF RFC 3588. Thus, the following table 2 is similar to table 1, but includes example definitions expressed in an Augmented Backus-Naur Form (ABNF) metalanguage syntax.

**Table 2: Diameter-Based MT Forward Short Message Request**

| Command Definition | Command AVP Fields < header >, < fixed >, { required }, and [ optional] | Notes |
|---|---|---|
| < MT-Forward-Short-Message-Request> ::= | < Diameter Header: 8388646, REQ, PXY, 16777313 > | numeric code identifying the message |
| | < Session-Id > | |
| | [ Vendor-Specific-Application-Id ] | |
| | {Auth-Session-State } | |
| | { Origin-Host} | |
| | { Origin-Realm} | |
| | { Destination-Host} | |
| | { Destination-Realm} | |
| | { User-Name } | |
| | [SMSMI-Correlation-ID] | |
| | { SC-Address} | |
| | { SM-RP-UI} | |
| | [ MME-Number-for-MT-SMS ] | |
| | [SGSN-Number] | |
| | [ TFR-Flags ] | |
| | [SM-Delivery-Timer] | |
| | [SM-Delivery-Start-Time] | |
| | [Overload -Supported- Feature] | Indicate overload control capability at network node (e.g., MME/SGSN) |
| | [Overload-Parameters] | |
| | *[Supported-Features] | *denotes elements that may have duplicate instances |
| | *[AVP] | |
| | * [Proxy-Info] | |
| | *[ Route-Record ] | |

The following tables 3 and 4 specify the involved information elements for MT forward short message the answer.

**Table 3: MT Forward Short Message Answer**

| IE name | Mapping to Diameter AVP | Cat. | Description |
|---|---|---|---|
| Result | Result-Code / Experimental-Result | | This information element shall contain the result of the operation. |
| | | | The Result-Code AVP shall be used to indicate success/errors as defined in the Diameter Base Protocol. |
| | | | The Experimental-Result AVP shall be used for SGd/Gdd errors. This is a grouped AVP which shall contain the 3GPP Vendor ID in the Vendor-Id AVP, and the error code in the Experimental-Result-Code AVP. The following errors are applicable: |
| | | | Unknown User; |
| | | | Absent User; |
| | | | User busy for MT SMS; |
| | | | Illegal User; |
| | | | Illegal Equipment; |
| | | | SM Delivery Failure; |
| | | | Congestion (e.g., FAILURE CONGESTION) |
| Absent User Diagnostic SM | Absent-User-Diagnostic-SM | | This information element may be present when Experimental-Result-Code is set to DIAMETER_ERROR_ABSENT_USER and it shall contain the reason of the absence of the user given by the MME or the SGSN. |
| SM Delivery Failure Cause | SM-Delivery-Failure-Cause | | If Experimental-Result-Code is set to DIAMETER_ERROR_SM_DELIVERY_FAILURE, this information element shall be present and indicate one of the following: |
| | | | memory capacity exceeded in the mobile equipment; |
| | | | UE error; |
| | | | mobile equipment not equipped to support the mobile terminated short message service; |
| | | | NAS congestion. |
| | | | It may be completed with a Diagnostic information element having a code set to, for example, DIAMETER_ERROR_MME CONGESTION |
| SM RP UI | SM-RP-UI | | If present, this information element shall contain a short message transfer protocol data unit in the message delivery acknowledgement from the MME to the Service Center. |
| Overload Supported Features | Overload-Supported-Feature | | If present, this information element shall contain the list of supported overload features. |
| Overload Parameters | Overload-Parameters | | If present, this information element shall contain the desired overload controls (e.g., overload suppression value, a back-off timer, or other parameters) |
| Supported Features | Supported-Features* | | If present, this information element shall contain the list of features supported by the origin host. *(See 3GPP TS 29.229) |

**Table 4: Diameter-Based MT Forward Short Message Answer**

| Command Definition | Command AVP Fields < header >, < fixed >, { required }, and [ optional] | Notes |
|---|---|---|
| <MT-Forward-Short-Message-Answer> = :: | < Diameter Header: 8388646, REQ, PXY, 16777313> | numeric code identifying the message |
| | <Session-Id> | |
| | [ Vendor-Specific-Application-Id ] | |
| | [ Result-Code ] | e.g., failure (congestion) |
| | [ Experimental-Result ] | |
| | { Auth-Session-State } | |
| | { Origin-Host} | |
| | { Origin-Realm} | |
| | [ Absent-User-Diagnostic-SM ] | |
| | [SM-Delivery-Failure-Cause ] | e.g., MME is congested |
| | [SM-RP-UI] | |
| | [Overload-Supported-Feature] | Parameters that control for overload situation |
| | [Overload-Parameters] | |
| | *[Supported-Features] | *denotes elements that may have duplicate instances |
| | *[ AVP ] | |
| | * [Proxy-Info] | |
| | *[ Route-Record ] | |

In some embodiments, the "Supported-Features" AVP in the forgoing tables can be used in addition to or as an alternative to the discrete "Overload-Supported-Feature" or "Overload-Parameters" AVPs. Also, the forgoing tables have similar counterparts for MO forward short message procedures that may be used when an SMS-SC is overloaded. For example, if the SMS-SC 30 (FIG. 1) is overloaded upon receipt of an MO forward short message request message from the MME 46, then the SMS-SC 30 may respond with an MO forward short message answer message that includes "Overload-Supported-Feature," "Overload-Parameters," or similar AVPs.

With respect to the foregoing tables, the MME and the SGSN behave as follows when receiving an MT Forward Short Message Request.

The MME or the SGSN check if the IMSI is known.

If it is not known, an Experimental-Result-Code set to
DIAMETER_ERROR_USER_UNKNOWN is returned.

The MME or the SGSN attempts to deliver the short message to the UE.

If the delivery of the short message to the UE is successful, then the MME or the SGSN returns a Result-Code set to DIAMETER_SUCCESS.

If the UE is not reachable via the MME, then the MME sets the MNRF flag and returns an Experimental-Result-Code set to DIAMETER_ERROR_ABSENT_USER.

If the UE is not reachable via the SGSN, then the SGSN sets the MNRG flag and returns an Experimental-Result-Code set to DIAMETER_ERROR_ABSENT_USER.

If the delivery of the mobile terminated short message failed because of memory capacity exceeded or UE error or UE not SM equipped, then the MME or the SGSN returns an Experimental-Result-Code set to DIAMETER_ERROR_SM_DELIVERY_FAILURE complemented with an SM Delivery Failure Cause indication.

If a requested facility is not supported, then the MME or the SGSN returns an Experimental-Result-Code set to DIAMETER_ERROR_FACILITY_NOT_SUPPORTED.

If the user is busy for MT SMS, i.e., the mobile terminated short message transfer cannot be completed because: another mobile terminated short message transfer is going on and the delivery node does not support message buffering, another mobile terminated short message transfer is going on and it is not possible to buffer the message for later delivery, or the message was buffered but it is not possible to deliver the message before the expiry of the buffering time defined in 3GPP TS 23.040; then the MME or the SGSN returns an Experimental-Result-Code set to DIAMETER_ERROR_USER_BUSY_FOR_MT_SMS.

If the delivery of the mobile terminated short message failed because the mobile station failed authentication, then the MME or the SGSN returns an Experimental-Result-Code set to DIAMETER_ERROR_ILLEGAL_USER.

If the delivery of the mobile terminated short message failed because an IMEI check failed, i.e., the IMEI was blacklisted or not white-listed, then the MME or the SGSN returns an Experimental-Result-Code set to DIAMETER_ERROR_ILLEGAL_EQUIPMENT.

If the delivery of the mobile terminated short message failed because of NAS level congestion, then the MME or the SGSN returns an Experimental-Result-Code set to DIAMETER_ERROR_MME_CONGESTION or DIAMETER_ERROR_SGSN_CONGESTION. MME or SGSN may also send back-off timer.

A common error cause DIAMETER_ERROR_SN_CONGESTION may also be defined where SN indicates "Serving Node."

With respect to the forgoing tables, the SMS-GMSC behaves as follows.

The SMS-GMSC makes use of this procedure over the SGd interface or over the Gdd interface for the delivery of an MT short message when it has selected the serving node of which it obtained the Diameter Identity from the answer of the Send Routing Info for SM procedure.

Note that the SMS-GMSC is not aware that the MT Forward Short Message Request may be routed to an SMS router.

On receiving congestion result code with back-off timer, SMS-GMSC may start the timer. For an MT SM (or device triggering message) with validity period, the SMS-GMSC can compare the validity period and the back-off timer duration, if any, to conduct further handling for the triggering message. If the validity period is larger than the back-off timer duration, the SMS-GMSC can attempt delivery of the triggering message to the target UE at a later time after the expiration of the back-off timer duration. Otherwise, the SMS-GMSC can delete the triggering message after the expiration of the validity period and report the failure of the trigger delivery (e.g., indicates that the cause of the failure delivery is due to network congestion) to the MTC-IWF.

### 4. Example UE Embodiment

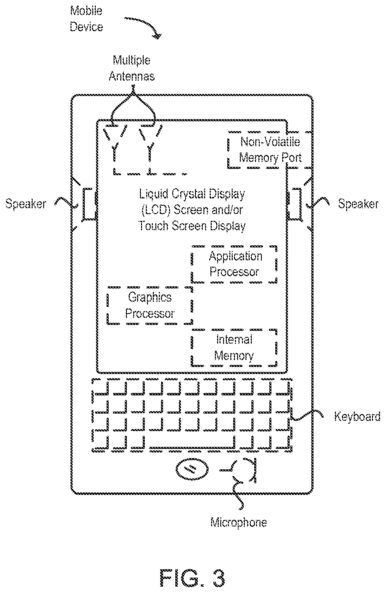

FIG. 3 provides an example illustration of a mobile device, commonly deployed as a UE, and referred to as a mobile station (MS), a mobile wireless device, a mobile communication device, a tablet, a handset, or other type of mobile wireless device. The mobile device can include one or more antennas configured to communicate with a transmission station, such as a base station (BS), an eNB, a base band unit (BBU), a remote radio head (RRH), a remote radio equipment (RRE), a relay station (RS), a radio equipment (RE), or other type of wireless wide area network (WWAN) access point. The mobile device can be configured to communicate using at least one wireless communication standard including 3GPP LTE, WiMAX, High Speed Packet Access (HSPA), Bluetooth, and WiFi. The mobile device can communicate using separate antennas for each wireless communication standard or shared antennas for multiple wireless communication standards. The mobile device can communicate in a wireless local area network (WLAN), a wireless personal area network (WPAN), and/or a WWAN.

FIG. 3 also provides an illustration of a microphone and one or more speakers that can be used for audio input and output from the mobile device. The display screen may be a liquid crystal display (LCD) screen, or other type of display screen such as an organic light emitting diode (OLED) display. The display screen can be configured as a touch screen. The touch screen may use capacitive, resistive, or another type of touch screen technology. An application processor and a graphics processor can be coupled to internal memory to provide processing and display capabilities. A non-volatile memory port can also be used to provide data input/output options to a user. The non-volatile memory port may also be used to expand the memory capabilities of the mobile device. A keyboard may be integrated with the mobile device or wirelessly connected to the mobile device to provide additional user input. A virtual keyboard may also be provided using the touch screen.

### 5. Example Embodiments

Examples may include subject matter such as a method, means for performing acts of the method, at least one machine-readable medium including instructions that, when performed by a machine cause the machine to performs acts of the method, or of an apparatus or system for SM load control according to embodiments and examples described herein. The following examples are enumerated for added clarity.
Example 1. An network entity for use in a 3rd generation partnership project (3GPP) network, the network entity comprising circuitry configured to: receive from a short message service - service center (SMS-SC) entity a mobile terminated (MT) forward short message request; determine whether the network entity is overloaded such that the network entity is unable to deliver a short message (SM) to a user equipment (UE); and send to the SMS-SC an MT forward short message answer having information indicating that the network entity is overloaded, in which the MT forward short message answer causes the SMS-SC to temporarily suppress sending further SMs, and in which the network entity comprises at least one of a mobility management entity (MME) or a serving general packet radio service support node (SGSN).
Example 2. The network entity of example 1, in which the information includes a suppression parameter that configures the SMS-SC to delay sending further SMs for a predetermined time.
Example 3. The network entity of example 1, in which the information includes a suppression parameter that configures the SMS-SC to continue to send high priority SMs to the UE during an overload situation or network congestion.
Example 4. The network entity of example 1, in which the circuitry is further configured to send a second message having updated suppression parameters for ceasing trigger suppression in response to the network entity recovering from being overloaded.
Example 5. The network entity of example 1, in which the network entity is overloaded due to hardware resource limitations or network congestion.
Example 6. The network entity of example 1, in which the circuitry is further configured to send a second message indicating updated suppression parameters for decreasing an amount of trigger suppression in response to the network entity recovering from being overloaded.
Example 7. The network entity of example 1, in which the MT forward short message request and the MT forward short message answer are defined by a diameter-based message format that includes an attribute value pair indicating an occurrence of a congestion situation.
Example 8. The network entity of example 1, in which in response to a non-access stratum (NAS) level congestion control in place for the UE, the network entity is configured to reject a trigger request so as to avoid mobile originated (MO) mobility management (MM) or session management signaling from the UE to the network.
Example 9. A short message service - service center (SMS-SC) device comprising circuitry configured to: transmit to a network node a short message (SM) by using an interface between the SMS-SC device and the network node, in which the interface is an SGd interface when the network node comprises a mobility management entity (MME), and in which the interface is a Gdd interface when the network node comprises a serving general packet radio service support node (SGSN); receive through the interface a message response indicating that network node is unable to deliver the SM to a target mobile station, the message response including a parameter for suppressing transmission of a subsequent SM to the network node while the network node is unable to deliver the subsequent SM; and determine whether to transmit the subsequent SM to the network node based on the message response.
Example 10. The SMS-SC device of example 9, in which the parameter includes a back-off timer indicating a suppression period for suppressing transmission of the subsequent SM to the network node during the suppression period.
Example 11. The SMS-SC of example 10, in which the subsequent SM includes a validity period, and the circuitry is further configured to: compare the validity period to the suppression period; and transmit the subsequent SM after expiration of the suppression period and prior to expiration of the validity period.
Example 12. The SMS-SC device of example 9, in which the circuitry is further configured to: determine whether the subsequent SM is a high priority SM; transmit the subsequent SM when it is a high priority SM; and suppress transmission of the subsequent SM when it is not a high priority SM.
Example 13. The SMS-SC device of example 9, in which the SM is a triggering message having a validity period, and the circuitry is further configured to: delete the triggering message after expiration of the validity period; and report a failure of trigger delivery.
Example 14. The SMS-SC device of example 9, in which the circuitry is further configured to: determine whether the SM is a device trigger or a mobile terminated short message service (MT-SMS) message by reading a transfer protocol-protocol identifier (TP-PID) field of the SM; and allow delivery of the SM based on whether it is determined to be a device trigger or an MT-SMS message.
Example 15. The SMS-SC of example 9, in which the circuitry is further configured to: determine whether the network node is congested based on an operator policy or configuration; and allow delivery of the SM based on whether it is determined to be a device trigger or a mobile terminated short message service message.
Example 16. A method for controlling an amount of mobile terminated (MT) short message service (SMS) (MT-SMS) messages to be delivered to a mobility management entity (MME) or a serving general packet radio service support node (SGSN) in a 3rd generation partnership project network, the method comprising: detecting at the MME/SGSN a congestion event; and transmitting over an SGd/Gdd interface, in response to detecting the congestion event, a diameter-based message including an information element having an attribute value pair indicating that the MME/SGSN is temporarily unable to deliver an MT-SMS message.
Example 17. The method of example 16, in which the MT-SMS messages comprise device triggering messages over a T4 interface.
Example 18. The method of example 16, further comprising: determining a suppression duration in which the MME/SGSN is temporarily unable to deliver an MT-SMS message; and including information in the diameter-based message that indicates the suppression duration.
Example 19. The method of example 16, further comprising: determining that the congestion event has subsided; and transmitting over an SGd/Gdd interface, a message indicating the congestion event has subsided.
Example 20. The method of example 16, in which the congestion event comprises a non-access stratum (NAS) level congestion control event.
Example 21. A network node comprising circuitry configured to: transmit to a short message service - service center (SMS-SC) device a mobile originated (MO) short message (SM) by using an interface between the network node and the SMS-SC device, in which the interface is an SGd interface when the network node comprises a mobility management entity (MME), and in which the interface is a Gdd interface when the network node comprises a serving general packet radio service support node (SGSN); receive through the interface a message response indicating that the SMS-SC device is unable to deliver the MO SM to a target destination, the message response including a parameter for suppressing transmission of a subsequent MO SM from the network node while the SMS-SC device is unable to deliver the subsequent MO SM; and determine whether to transmit the subsequent MO SM to the SMS-SC device based on the message response.
Example 22. The network node of example 21, in which the parameter includes a back-off timer indicating a suppression period for suppressing transmission of the subsequent MO SM to the SMS-SC device during the suppression period.
Example 23. The network node of example 22, in which the subsequent MO SM includes a validity period, and the circuitry is further configured to: compare the validity period to the suppression period; and transmit the subsequent MO SM after expiration of the suppression period and prior to expiration of the validity period.
Example 24. The network node of example 21, in which the circuitry is further configured to: determine whether the subsequent MO SM is a high priority MO SM; transmit the subsequent MO SM when it is a high priority MO SM; and suppress transmission of the subsequent MO SM when it is not a high priority MT SM.
Example 25. A method performed by a network entity for use in a 3rd generation partnership project (3GPP) network, the method comprising: receiving from a short message service - service center (SMS-SC) entity a mobile terminated (MT) forward short message request; determining whether the network entity is overloaded such that the network entity is unable to deliver a short message (SM) to a user equipment (UE); and sending to the SMS-SC an MT forward short message answer having information indicating that the network entity is overloaded, in which the MT forward short message answer causes the SMS-SC to temporarily suppress sending further SMs, and in which the network entity comprises at least one of a mobility management entity (MME) or a serving general packet radio service support node (SGSN).
Example 26. The method of example 25, in which the information includes a suppression parameter that configures the SMS-SC to delay sending further SMs for a predetermined time.
Example 27. The method of example 25, in which the information includes a suppression parameter that configures the SMS-SC to continue to send high priority SMs to the UE during an overload situation or network congestion.
Example 28. The method of example 25, further comprising sending a second message having updated suppression parameters for ceasing trigger suppression in response to the network entity recovering from being overloaded.
Example 29. The method of example 25, in which the network entity is overloaded due to hardware resource limitations or network congestion.
Example 30. The method of example 25, further comprising sending a second message indicating updated suppression parameters for decreasing an amount of trigger suppression in response to the network entity recovering from being overloaded.
Example 31. The method of example 25, in which the MT forward short message request and the MT forward short message answer are defined by a diameter-based message format that includes an attribute value pair indicating an occurrence of a congestion situation.
Example 32. The method of example 25, in which in response to a non-access stratum (NAS) level congestion control in place for the UE, the network entity is configured to reject a trigger request so as to avoid mobile originated (MO) mobility management (MM) or session management signaling from the UE to the network.
Example 33. A method performed by a short message service - service center (SMS-SC) device, the method comprising: transmitting to a network node a short message (SM) by using an interface between the SMS-SC device and the network node, in which the interface is an SGd interface when the network node comprises a mobility management entity (MME), and in which the interface is a Gdd interface when the network node comprises a serving general packet radio service support node (SGSN); receiving through the interface a message response indicating that network node is unable to deliver the SM to a target mobile station, the message response including a parameter for suppressing transmission of a subsequent SM to the network node while the network node is unable to deliver the subsequent SM; and determining whether to transmit the subsequent SM to the network node based on the message response.
Example 34. The method of example 33, in which the parameter includes a back-off timer indicating a suppression period for suppressing transmission of the subsequent SM to the network node during the suppression period.
Example 35. The method of example 34, in which the subsequent SM includes a validity period, and the method further comprising: comparing the validity period to the suppression period; and transmitting the subsequent SM after expiration of the suppression period and prior to expiration of the validity period.
Example 36. The method of example 33, further comprising: determining whether the subsequent SM is a high priority SM; transmitting the subsequent SM when it is a high priority SM; and suppressing transmission of the subsequent SM when it is not a high priority SM.
Example 37. The method of example 33, in which the SM is a triggering message having a validity period, and the method further comprising: deleting the triggering message after expiration of the validity period; and reporting a failure of trigger delivery.
Example 38. The method of example 33, further comprising: determining whether the SM is a device trigger or a mobile terminated short message service (MT-SMS) message by reading a transfer protocol-protocol identifier (TP-PID) field of the SM; and allowing delivery of the SM based on whether it is determined to be a device trigger or an MT-SMS message.
Example 39. The method of example 33, further comprising: determining whether the network node is congested based on an operator policy or configuration; and allowing delivery of the SM based on whether it is determined to be a device trigger or a mobile terminated short message service message.
Example 40. A computer-readable medium for controlling an amount of short message (SM) load communicated in a 3rd generation partnership project network, the computer-readable medium having stored thereon computer-executable instructions executable by a network entity to cause the network entity to: detect a congestion event at the network entity; and transmit over an SGd/Gdd interface, in response to detecting the congestion event, a diameter-based message including an information element having an attribute value pair indicating that the network entity is temporarily unable to deliver a SM message.
Example 41. The computer-readable medium of example 40, in which the SM load comprises device triggering messages.
Example 42. The computer-readable medium of example 40, in which the instructions cause the network entity to: determine a suppression duration in which the network entity is temporarily unable to deliver an SM; and include information in the diameter-based message that indicates the suppression duration.
Example 43. The computer-readable medium of example 40, in which the instructions cause the network entity to: determine that the congestion event has subsided; and transmit over an SGd/Gdd interface, a message indicating the congestion event has subsided.
Example 44. The computer-readable medium of example 40, in which the congestion event comprises a non-access stratum (NAS) level congestion control event.
Example 45. The computer-readable medium of any of examples 40 through 44, in which the SM load includes mobile terminated (MT) short message service (SMS) messages.
Example 46. The computer-readable medium of any of examples 40 through 44, in which the SM load includes mobile ordinated (MO) short message service (SMS) messages.
Example 47. The computer-readable medium of any of examples 40 through 44, in which the network entity comprises at least one of a mobility management entity (MME) or a serving general packet radio service support node (SGSN).
Example 48. The computer-readable medium of any of examples 40 through 44, in which the network entity comprises a short message service - service center (SMS-SC) entity.
Example 49. At least one computer readable storage medium, having instructions stored thereon, that when executed on a device perform the method of any of examples 16 through 20, and 25 through 39.

The techniques introduced above can be implemented by programmable circuitry programmed or configured by software and/or firmware, or they can be implemented entirely by special-purpose hardwired circuitry, or in a combination of such forms. Such special-purpose circuitry (if any) can be in the form of, for example, one or more application-specific integrated circuits (ASICs), programmable logic devices (PLDs), field-programmable gate arrays (FPGAs), etc.

Embodiments may be implemented in one or a combination of hardware, firmware, and software. Embodiments may also be implemented as instructions stored on a computer-readable storage device, which may be read and executed by at least one processor to perform the operations described herein. A computer-readable storage device may include any non-transitory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media. In some embodiments, one or more processors may be configured with instructions stored on a computer-readable storage device.

Although the present disclosure includes reference to specific example embodiments, it will be recognized that the claims are not limited to the embodiments described, but can be practiced with modification and alteration within the spirit and scope of the appended claims. Accordingly, the specification and drawings are to be regarded in an illustrative sense rather than a restrictive sense. It will be understood by skilled persons that many changes may be made to the details of the above-described embodiments without departing from the underlying principles of the invention. The scope of the present invention should, therefore, be determined only by the following claims.

## Claims

1. A system comprising:
a short message service - service center SMS-SC (30); and
a network entity comprising at least one of a mobility management entity MME (46) or a serving general packet radio service support node SGSN (56) for initiating a back-off timer on the SMS-SC in a 3rd generation partnership project 3GPP network (10), the network entity comprising circuitry configured to:
receive from the SMS-SC a mobile terminated MT forward short message request;
determine whether the network entity is overloaded such that the network entity is applying to a user equipment UE (70) non-access stratum NAS level congestion controls for managing MME/SGSN delivery of a short message SM to the UE; and
send to the SMS-SC an MT forward short message answer having information indicating that the network entity is overloaded, in which the MT forward short message answer causes the SMS-SC to initiate a back-off timer to temporarily suppress sending further SMs to the network entity;
wherein the SMS-SC (30) is configured to:
initiate the back-off timer to temporarily suppress sending further SMs to the network entity.

2. The system of claim 1, in which the information includes a suppression parameter that configures the SMS-SC (30) to delay sending further SMs for a predetermined time.

3. The system of claim 1, in which the information includes a suppression parameter that configures the SMS-SC (30) to continue to send high priority SMs to the UE (70) during an overload situation or network congestion.

4. The system of claim 1, in which the circuitry is further configured to send a second message having updated suppression parameters for ceasing trigger suppression in response to the network entity recovering from being overloaded.

5. The system of claim 1, in which the circuitry is further configured to send a second message indicating updated suppression parameters for decreasing an amount of trigger suppression in response to the network entity recovering from being overloaded.

6. The system of claim 1, in which the MT forward short message request and the MT forward short message answer are defined by a diameter-based message format that includes an attribute value pair indicating an occurrence of a congestion situation.

7. The system of claim 1, in which in response to a non-access stratum NAS level congestion control in place for the UE (70), the network entity is configured to reject a trigger request so as to avoid mobile originated MO mobility management MM or session management signaling from the UE to the network (10).

8. A method performed by system comprising a short message service - service center SMS-SC and a network entity comprising at least one of a mobility management entity MME or a serving general packet radio service support node SGSN for initiating a back-off timer on a short message service - service center SMS-SC in a 3rd generation partnership project 3GPP network, the method comprising:
the network entity receiving from the SMS-SC a mobile terminated MT forward short message request;
the network entity determining whether the network entity is overloaded such that the network entity is applying to a user equipment UE non-access stratum NAS level congestion controls for managing MME/SGSN delivery of a short message SM to the UE;
the network entity sending to the SMS-SC an MT forward short message answer having information indicating that the network entity is overloaded, in which the MT forward short message answer causes the SMS-SC to initiate a back-off timer to temporarily suppress sending further SMs to the network entity; and
the SMS-SC initiating the back-off timer to temporarily suppress sending further SMs to the network entity.

9. The method of claim 8, in which the information includes a suppression parameter that configures the SMS-SC to delay sending further SMs for a predetermined time.

10. The method of claim 8, in which the information includes a suppression parameter that configures the SMS-SC to continue to send high priority SMs to the UE during an overload situation or network congestion.

11. The method of claim 8, further comprising sending a second message having updated suppression parameters for ceasing trigger suppression in response to the network entity recovering from being overloaded.

12. The method of claim 8, further comprising sending a second message indicating updated suppression parameters for decreasing an amount of trigger suppression in response to the network entity recovering from being overloaded.

13. The method of claim 8, in which the MT forward short message request and the MT forward short message answer are defined by a diameter-based message format that includes an attribute value pair indicating an occurrence of a congestion situation.

14. The method of claim 8, in which in response to a non-access stratum NAS level congestion control in place for the UE, the network entity is configured to reject a trigger request so as to avoid mobile originated MO mobility management MM or session management signaling from the UE to the network.

15. At least one computer readable storage medium, having instructions stored thereon, that when executed on a device perform the method of any of claims 8 to 14.

## Patentansprüche

1. System, welches Folgendes umfasst:
ein Kurznachrichtendienst-Servicecenter, SMS-SC - *Short Message Service - Service Center,* (30); und
eine Netzwerkeinheit, die mindestens eines aus einer Mobilitätsmanagementeinheit, MME - *Mobility Management Entity,* (46) oder einem SGSN, Serving General Packet Radio Service Support Node, (56) zum Initiieren eines Backoff-Timers in dem SMS-SC in einem 3GPP, 3rd Generation Partnership Project, -Netzwerk (10) umfasst, wobei die Netzwerkeinheit Schaltungen umfasst, die zu Folgendem konfiguriert sind:
Empfangen, von dem SMS-SC, einer MT, Mobile Terminated, -Kurznachrichten-Weiterleitungsanfrage;
Bestimmen, ob die Netzwerkeinheit überlastet ist, derart, dass die Netzwerkeinheit NAS, Non-Access Stratum, -Level-Überlaststeuerungen zum Verwalten der MME/SGSN-Bereitstellung einer Kurznachricht, SM - *Short Message,* an ein UE auf das Endgerät, UE *- User Equipment,* (70) anwendet; und
Senden, an das SMS-SC, einer MT-Kurznachrichten-Weiterleitungsantwort, die Informationen aufweist, die angeben, dass die Netzwerkeinheit überlastet ist, wobei die MT-Kurznachrichten-Weiterleitungsantwort das SMS-SC veranlasst, einen Backoff-Timer zu initiieren, um das Senden weiterer SMs an die Netzwerkeinheit vorübergehend zu unterdrücken;
wobei das SMS-SC (30) zu Folgendem konfiguriert ist:
Initiieren des Backoff-Timers zum vorübergehenden Unterdrücken des Sendens weiterer SMs an die Netzwerkeinheit.

2. System nach Anspruch 1, wobei die Informationen einen Unterdrückungsparameter beinhalten, der das SMS-SC (30) zum Verzögern des Sendens weiterer SMs für eine vorbestimmte Zeit konfiguriert.

3. System nach Anspruch 1, wobei die Informationen einen Unterdrückungsparameter beinhalten, der das SMS-SC (30) zum Fortsetzen des Sendens von SMs mit hoher Priorität an das UE (70) während einer Überlastsituation oder Netzwerküberlastung konfiguriert.

4. System nach Anspruch 1, wobei die Schaltungen ferner konfiguriert sind zum Senden einer zweiten Nachricht, die aktualisierte Unterdrückungsparameter zum Beenden einer Auslöseunterdrückung als Reaktion darauf, dass sich die Netzwerkeinheit von der Überlast erholt, aufweist.

5. System nach Anspruch 1, wobei die Schaltungen ferner konfiguriert sind zum Senden einer zweiten Nachricht, die aktualisierte Unterdrückungsparameter zum Verringern einer Menge an Auslöseunterdrückung als Reaktion darauf, dass sich die Netzwerkeinheit von der Überlast erholt, angibt.

6. System nach Anspruch 1, wobei die MT-Kurznachrichten-Weiterleitungsanfrage und die MT-Kurznachrichten-Weiterleitungsantwort durch ein Durchmesser-basiertes Nachrichtenformat definiert sind, das ein Attributwert-Paar beinhaltet, das ein Auftreten einer Überlastungssituation angibt.

7. System nach Anspruch 1, wobei, als Reaktion darauf, dass eine NAS-Level-Überlaststeuerung für das UE (70) vorliegt, die Netzwerkeinheit konfiguriert ist zum Zurückweisen einer Auslöseanfrage, um so MO, Mobile Originated, - Mobilitätsmanagement, MM - *Mobility Management,* oder -Sitzungsmanagement-Signalisierung von dem UE an das Netzwerk (10) zu vermeiden.

8. Verfahren, das durch ein System durchgeführt wird, welches ein Kurznachrichtendienst-Servicecenter, SMS-SC - *Short Message Service* - *Service Center,* und eine Netzwerkeinheit, die mindestens eines aus einer Mobilitätsmanagementeinheit, MME - *Mobility Management Entity,* oder einem SGSN, Serving General Packet Radio Service Support Node, zum Initiieren eines Backoff-Timers in dem SMS-SC in einem 3GPP, 3rd Generation Partnership Project, - Netzwerk umfasst, umfasst, wobei das Verfahren Folgendes umfasst:
Empfangen, durch die Netzwerkeinheit, einer MT, Mobile Terminated, -Kurznachrichten-Weiterleitungsanfrage von dem SMS-SC;
Bestimmen, durch die Netzwerkeinheit, ob die Netzwerkeinheit überlastet ist, derart, dass die Netzwerkeinheit NAS, Non-Access Stratum, -Level-Überlaststeuerungen zum Verwalten der MME/SGSN-Bereitstellung einer Kurznachricht, SM - *Short Message,* an ein UE auf das Endgerät, UE - *User Equipment,* anwendet;
Senden, durch die Netzwerkeinheit, einer MT-Kurznachrichten-Weiterleitungsantwort, die Informationen aufweist, die angeben, dass die Netzwerkeinheit überlastet ist, an das SMS-SC, wobei die MT-Kurznachrichten-Weiterleitungsantwort das SMS-SC veranlasst, einen Backoff-Timer zu initiieren, um das Senden weiterer SMs an die Netzwerkeinheit vorübergehend zu unterdrücken; und
Initiieren, durch das SMS-SC, des Backoff-Timers zum vorübergehenden Unterdrücken des Sendens weiterer SMs an die Netzwerkeinheit.

9. Verfahren nach Anspruch 8, wobei die Informationen einen Unterdrückungsparameter beinhalten, der das SMS-SC zum Verzögern des Sendens weiterer SMs für eine vorbestimmte Zeit konfiguriert.

10. Verfahren nach Anspruch 8, wobei die Informationen einen Unterdrückungsparameter beinhalten, der das SMS-SC zum Fortsetzen des Sendens von SMs mit hoher Priorität an das UE während einer Überlastsituation oder Netzwerküberlastung konfiguriert.

11. Verfahren nach Anspruch 8, welches ferner das Senden einer zweiten Nachricht, die aktualisierte Unterdrückungsparameter zum Beenden einer Auslöseunterdrückung als Reaktion darauf, dass sich die Netzwerkeinheit von der Überlast erholt, aufweist, umfasst.

12. Verfahren nach Anspruch 8, welches ferner das Senden einer zweiten Nachricht, die aktualisierte Unterdrückungsparameter zum Verringern einer Menge an Auslöseunterdrückung als Reaktion darauf, dass sich die Netzwerkeinheit von der Überlast erholt, angibt, umfasst.

13. Verfahren nach Anspruch 8, wobei die MT-Kurznachrichten-Weiterleitungsanfrage und die MT-Kurznachrichten-Weiterleitungsantwort durch ein Durchmesser-basiertes Nachrichtenformat definiert sind, das ein Attributwert-Paar beinhaltet, das ein Auftreten einer Überlastsituation angibt.

14. Verfahren nach Anspruch 8, wobei, als Reaktion darauf, dass eine NAS-Level-Überlaststeuerung für das UE vorliegt, die Netzwerkeinheit konfiguriert ist zum Zurückweisen einer Auslöseanfrage, um so MO, Mobile Originated, -Mobilitätsmanagement, MM - *Mobility Management,* oder -Sitzungsmanagement-Signalisierung von dem UE an das Netzwerk zu vermeiden.

15. Computerlesbares Speichermedium oder computerlesbare Speichermedien, das bzw. die darauf gespeicherte Anweisungen aufweist bzw. aufweisen, die, wenn sie auf einem Gerät ausgeführt werden, das Verfahren nach einem der Ansprüche 8 bis 14 durchführen.

## Revendications

1. Système comprenant :
un centre de service de service de messages courts SMS-SC (30) ; et
une entité de réseau comprenant au moins un élément parmi une entité de gestion de mobilité MME (46) ou un noeud de support de service radio par paquets général de desserte SGSN (56) pour démarrer un temporisateur de réduction de puissance sur le SMS-SC dans un réseau de projet de partenariat de troisième génération 3GPP (10), l'entité de réseau comprenant un circuit conçu pour :
recevoir, du SMS-SC, une requête de message court aller destiné à un mobile MT ;
déterminer si l'entité de réseau est surchargée de telle sorte que l'entité de réseau s'applique à des contrôles d'encombrement au niveau d'une strate de non-accès NAS de l'équipement utilisateur UE (70) pour gérer la distribution de SGSN/MME d'un message court SM à l'UE ; et
envoyer une réponse au message court aller MT au SMS-SC comportant des informations indiquant que l'entité de réseau est surchargée, dans lequel la réponse au message court aller MT amène le SMS-SC à démarrer un temporisateur de réduction de puissance pour supprimer temporairement l'envoi d'autres SM à l'entité de réseau ;
dans lequel le SMS-SC (30) est conçu pour :
démarrer le temporisateur de réduction de puissance pour supprimer temporairement l'envoi d'autres SM à l'entité de réseau.

2. Système selon la revendication 1, dans lequel les informations comprennent un paramètre de suppression qui configure le SMS-SC (30) pour retarder l'envoi d'autres SM pendant un moment prédéterminé.

3. Système selon la revendication 1, dans lequel les informations comprennent un paramètre de suppression qui configure le SMS-SC (30) pour continuer à envoyer des SM à priorité élevée à l'UE (70) pendant une situation de surcharge ou un encombrement de réseau.

4. Système selon la revendication 1, dans lequel le circuit est conçu en outre pour envoyer un second message ayant des paramètres de suppression mis à jour pour cesser de déclencher des suppressions en réponse à l'entité de réseau récupérant d'avoir été surchargée.

5. Système selon la revendication 1, dans lequel le circuit est conçu en outre pour envoyer un second message indiquant des paramètres de suppression mis à jour permettant de diminuer une quantité de déclenchements de suppressions en réponse à l'entité de réseau récupérant d'avoir été surchargée.

6. Système selon la revendication 1, dans lequel la requête de message court aller MT et la réponse au message court aller MT sont définies par un format de message basé sur le diamètre qui comprend une paire de valeurs d'attributs indiquant une occurrence d'une situation d'encombrement.

7. Système selon la revendication 1, dans lequel en réponse à un contrôle d'encombrement au niveau d'une strate de non-accès NAS en place pour l'UE (70), l'entité de réseau est conçue pour rejeter une requête de déclenchement de façon à éviter une gestion de mobilité MM provenant d'un mobile MO ou une signalisation de gestion de session de l'UE au réseau (10) .

8. Procédé mis en oeuvre par un système comprenant un centre de service de service de messages courts SMS-SC et une entité de réseau comprenant au moins un élément parmi une entité de gestion de mobilité MME ou un noeud de support de service radio par paquets général de desserte SGSN pour démarrer un temporisateur de réduction de puissance sur un centre de service de service de messages courts SMS-SC dans un réseau de projet de partenariat de troisième génération 3GPP, le procédé comprenant :
l'entité de réseau qui reçoit, du SMS-SC, une requête de message court aller destiné à un mobile MT ;
l'entité de réseau qui détermine si l'entité de réseau est surchargée de telle sorte que l'entité de réseau s'applique à des contrôles d'encombrement au niveau d'une strate de non-accès NAS de l'équipement utilisateur UE pour gérer la distribution de SGSN/MME d'un message court SM à l'UE ;
l'entité de réseau qui envoie une réponse au message court aller MT au SMS-SC comportant des informations indiquant que l'entité de réseau est surchargée, dans lequel la réponse au message court aller MT amène le SMS-SC à démarrer un temporisateur de réduction de puissance pour supprimer temporairement l'envoi d'autres SM à l'entité de réseau ; et
le SMS-SC démarre le temporisateur de réduction de puissance pour supprimer temporairement l'envoi d'autres SM à l'entité de réseau.

9. Procédé selon la revendication 8, dans lequel les informations comprennent un paramètre de suppression qui configure le SMS-SC pour retarder l'envoi d'autres SM pendant un moment prédéterminé.

10. Procédé selon la revendication 8, dans lequel les informations comprennent un paramètre de suppression qui configure le SMS-SC pour continuer à envoyer des SM à priorité élevée à l'UE pendant une situation de surcharge ou un encombrement de réseau.

11. Procédé selon la revendication 8, consistant en outre à envoyer un second message ayant des paramètres de suppression mis à jour pour cesser de déclencher des suppressions en réponse à l'entité de réseau récupérant d'avoir été surchargée.

12. Procédé selon la revendication 8, consistant en outre à envoyer un second message indiquant des paramètres de suppression mis à jour permettant de diminuer une quantité de déclenchements de suppressions en réponse à l'entité de réseau récupérant d'avoir été surchargée.

13. Procédé selon la revendication 8, dans lequel la requête de message court aller MT et la réponse au message court aller MT sont définies par un format de message basé sur le diamètre qui comprend une paire de valeurs d'attributs indiquant une occurrence d'une situation d'encombrement.

14. Procédé selon la revendication 8, dans lequel en réponse à un contrôle d'encombrement au niveau d'une strate de non-accès NAS en place pour l'UE, l'entité de réseau est conçue pour rejeter une requête de déclenchement de façon à éviter une gestion de mobilité MM provenant d'un mobile MO ou une signalisation de gestion de session de l'UE au réseau.

15. Au moins un support de stockage lisible par ordinateur, sur lequel des instructions sont stockées, qui, lorsqu'il est exécuté sur un dispositif, met en oeuvre le procédé selon l'une quelconque des revendications 8 à 14.
